# EUROPEAN PATENT SPECIFICATION

(11) **EP 1 040 891 B1**
(45) Date of publication and mention of the grant of the patent: **30.07.2003**
(21) Application number: 99830139.4
(22) Date of filing: 17.03.1999
(51) Int. Cl.: B23Q 7/04, B25B 5/14, B25B 1/18

(54) **A work centre having a plurality of clamps for clamping a work-piece**
Arbeitsstation mit einer Mehrzahl von Spanneinrichtungen zum Spannen eines Werkstückes
Poste de travail avec plusieurs dispositifs de serrage pour le serrage d'une pièce

(43) Date of publication of application: 04.10.2000
(73) Proprietor: ME.C.AL. S.n.c. di MESCHINI ROSELLA, I-27030 Frascarolo (Pavia) (IT)
(72) Inventor: Cavezzale, Ennio, 27030 Frascarolo - Pavia (IT)
(74) Representative: Perani, Aurelio

(56) References cited:
- EP-A- 0 562 216
- EP-A- 0 623 420
- DE-A- 4 307 928
- GB-A- 2 212 421
- US-A- 1 852 586
- US-A- 4 523 749
- US-A- 5 163 663
- PATENT ABSTRACTS OF JAPAN vol. 96, no. 12, 26 December 1996 (1996-12-26) & JP 08 197357 A (SANKYO ALUM IND CO LTD), 6 August 1996 (1996-08-06)

## Description

The present invention relates to a work centre having a plurality of clamps for clamping a work-piece. Each clamp comprises a clamp body supported for sliding by longitudinal guides arranged on top of a bench along a working axis, a support surface or working plane for the work-piece disposed on top of the clamp body, as well as jaws which are movable relative to one another from a separated position to a close-together position for gripping the work-piece, and which are supported for sliding on the clamp body.

Purely for the purpose of simplifying the explanation of the present invention, reference will be made below in non-limiting manner to a work centre for producing profiled sections of the type used for the construction of casings or frames in general, or for machining pieces having one dimension which is predominant relative to the others such as, for example, tubes, panels and beams or the like.

At the moment, work centres of the type mentioned above are formed with actuator means fixed above the clamp body in order to support and to open and close the jaws.

The basic disadvantage which is found in work centres of the type specified above can be recognized mainly in the fact that the known clamp is bulky.

In particular, the above-mentioned actuator means obstruct the movement of the working members around the piece and prevent quick and accurate access to the work area by the operator.

In known work centres, the space above the working plane, particularly the space which the working member can reach (commonly defined as the work space), is taken up to a considerable extent by the actuator means and is not usable. For example, in known work centres, more than 30% of the work space is taken up or in any case is obstructed by the presence of the clamps.

In known work centres, it is impossible to perform operations in the vicinity of the clamp because of its large size, necessitating repeated positionings of the piece on the working surface in order to complete the work.

The increasing need for high-precision machining does not permit repeated positioning of the piece, since this operation leads to inevitable errors in the positioning of the machining reference points and hence to a considerable reduction in machining accuracy.

Known work centres also have the disadvantage that the clamps cannot be moved close together in order to achieve a clamping area of the work-piece extending along a considerable length of the piece so as to enable difficult operations to be performed accurately in the vicinity of the jaws of the clamping unit.

Moreover, lengthy operations to reposition the piece on the working plane lead to a considerable and hence unacceptable increase in production times.

EP-A-623420 discloses a work centre having a plurality of clamps, each clamp comprising a clamp body supported for sliding by a longitudinal guide. The actuator means are supported by the clamp body below the working plane, and above the longitudinal guide. Such a work centre has the drawback that the overall structure vertical size is considerable leading to weakness of the stability thereof.

The object of the present invention is to prevent the problems of the prior art described above and to propose a work centre which has a less bulky clamp.

This object is achieved by a work centre according to claim 1.

A better understanding of the present invention will be gained from the following description of a preferred embodiment thereof, given by way of non-limiting example, with reference to the appended drawings, in which:
Figure 1 shows a work centre, schematically and in perspective,
Figure 2 is a partially-sectioned axonometric view showing a detail of a clamp connected to the base of a work centre with the jaws in the close-together or clamped position,
Figure 3 is an axonometric view showing the clamp of Figure 2 with the jaws in the separated or open position,
Figure 4 shows the clamp of Figure 2 in which a jaw is fixed to the movement means so as to achieve maximum opening of the clamp,
Figure 5 is another partially-sectioned axonometric view showing a different embodiment of the invention with a clamp beside which there are detection means, together with means for fixing the clamp to means for supporting and moving the working members,
Figure 6 is a partially-sectioned plan view showing a detail of Figure 5,
Figure 7 shows a further embodiment of the invention, in a sectioned side view, and
Figure 8 is a partially-sectioned plan view showing the clamp of Figure 7.

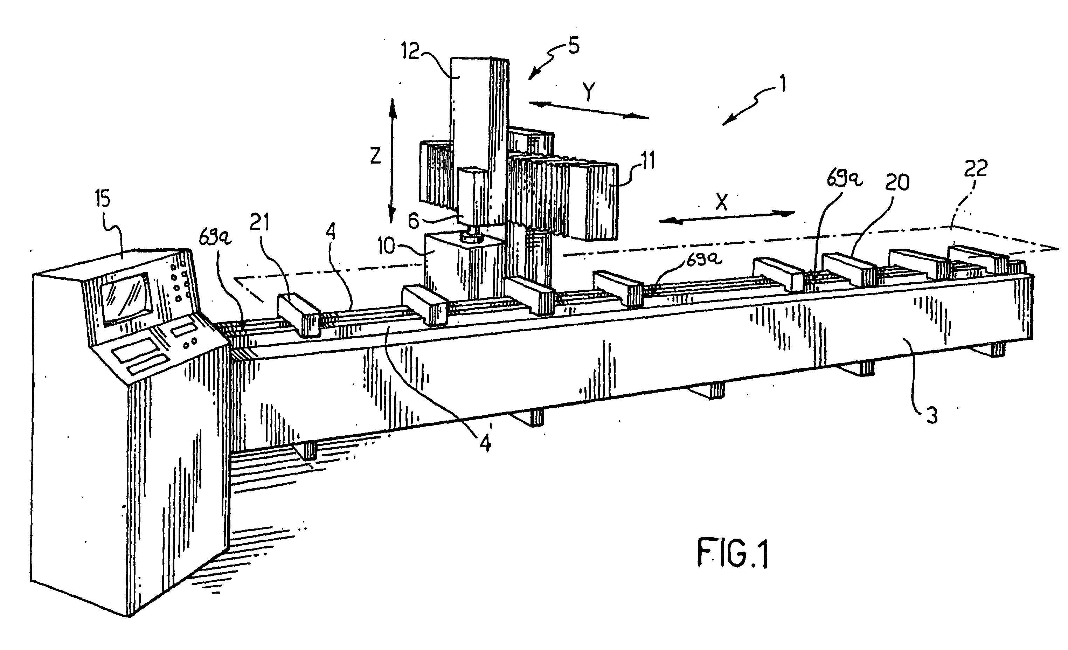

With reference to Figure 1, a work centre is generally indicated 1.

The work centre 1 has a bench 3 which supports sliding guides 4 longitudinally. The guides 4 are arranged parallel to a working axis, for example, the working axis defined by the axis X.

Means, generally indicated 5, for supporting and moving a working member or machining head, indicated 6, cooperate with the bench 3.

For example, a pillar 10 connected for sliding beside the bench 3 supports perpendicular arms 11, 12 which are slidable in order to move the head 6 in a work space disposed above and beside the bench 3.

The pillar 10 and the arms 11, 12 of the centre 1 are operatively connected to a control unit 15, for example, a numerical control device.

A plurality of clamps 20 are supported for sliding on the guides 4 on top of the bench 3.

Each clamp has an upper surface 21 for supporting the work-piece.

The support surfaces 21 of the plurality of clamps 20 are coplanar and define a working plane 22.

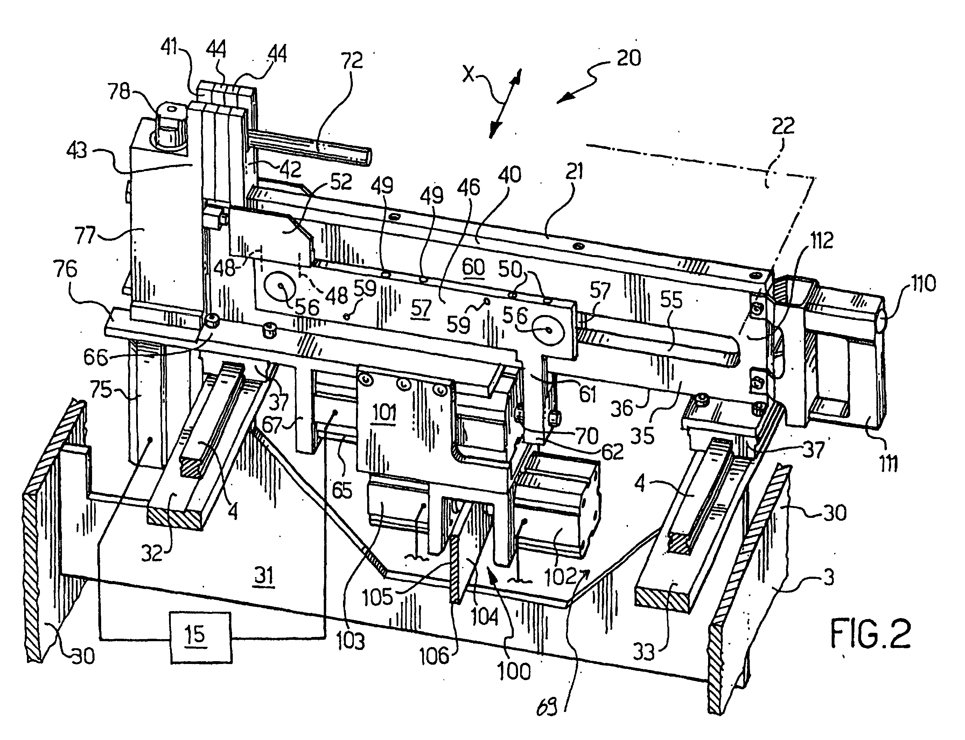

As can be seen from Figures 2, 3 and 4, the bench 3 has longitudinal shoulders 30 between which transverse ribs 31 are provided.

Support plates 32 and 33 for the guides 4 are fixed transversely to the plurality of ribs 31.

A clamp body 35, arranged transverse the guides 4, has its base 36 connected to the guides 4 by means of sliding blocks 37.

The clamp body 35 is advantageously plate-shaped and is arranged vertically so as to be extremely compact transversely (along the X axis).

On the top of the clamp body 35 is the surface 21 for supporting the piece, defining the working plane 22.

The surface 21 for supporting the piece is particularly advantageously produced by the fixing, on top of the clamp body 35, of a plate 40 of synthetic material such as, for example, a Nylon or Teflon plate, preferably made of a material softer than the material to be worked.

Jaws 41 and 42, supported on the clamp body 35, are movable relative to one another from a separated position to a close-together position for gripping the work-piece.

In a particular embodiment of the invention, one jaw 41 is fixed to the clamp body 35.

For example, fixed to one end of the clamp body 35 is a stirrup 43 the arms of which extend transversely relative to and above the working plane 22.

The jaws are preferably covered with a layer 44 of synthetic material.

According to a preferred embodiment of the invention, each movable jaw 42 is supported by a carriage 46 connected for sliding on the clamp body 35.

Advantageously, the carriage 46 is plate-shaped and is arranged facing the clamp body 35, considerably limiting the transverse bulk of the clamp 20.

On top of the carriage 46 there is a plurality of longitudinal fixing positions 48, 49, 50 for the movable jaw 42.

The movable jaw 42 is, for example, stirrup-shaped and is fixed to an L-shaped element 52 supported on the carriage in the region of the fixing position 48, enabling a desired distance between the jaws 41, 42, or clamp opening, to be achieved, as will be explained in greater detail below.

The clamping arms of the movable jaw 42 are arranged transversely relative to the working plane 22 and extend above the plane 22.

In a particular embodiment of the invention, the clamp body 35 has a longitudinal channel.

The channel houses guide means 56 fixed to the carriage 46.

Preferably, the clamp body 35 has a longitudinal slot 55.

The carriage 46 comprises two plates 57 disposed opposite the sides of the clamp body 35 in the region of the slot 55.

Bearings 56 housed in the slot 55 are connected for rotating freely on the plates 57.

This preferred embodiment of the invention allows the carriage 46 to be disposed below the working plane 22.

Through-holes provided in the plates 57 house grub screws 59 for lateral guiding of the carriage 46 without play.

In particular, the grub screws 59 are hollow and have frusto-conical heads facing the clamp body 35. Each hollow head houses a freely rotatable ball. The ball is acted on by a spring which is provided inside the grub screw so as to press the ball against the side surface 60 of the clamp body 35 and to preload the carriage 46.

The carriage 46 has, on its base, a downwardly-facing extension 61 arranged with its free end below the working plane 22 and preferably below the plane in which the guides 4 are disposed.

Actuator means 65 are fixed to the clamp body 35 below the working plane 22.

In particular, a base plate 66 is fixed to the clamp body 35 and has a transverse rib 67 for supporting the actuator means 65.

The base plate 66 is advantageously disposed above the sliding blocks 37 of the clamp body 35. The actuator means 65 are thus disposed below the plane of the guides 4.

A further advantage is that the actuator means 65 are housed in a channel 69a provided in the bench 3, produced by the provision of V-shaped windows 69 in the ribs 31 of the bench 3.

The actuator means 65 comprise, for example, a pneumatic or hydraulic cylinder and piston device.

The rod 70 of the piston is operatively connected to the free end 62 of the extension 61 of the carriage 46.

Alternatively, a geared motor unit may be provided, operatively connected to a worm screw supported by rolling bearings beneath the clamp body 35.

Female-threaded members with opposed threads cooperate with the screw and are fixed to the ends 62 of the extensions 61 of carriages 46 supporting jaws movable relative to one another.

At the end of the clamp body 35 there is a clamping bracket 72 cooperating with the jaws 41, 42.

When the work-piece is in the clamped position, the clamping bracket 72 is disposed against the piece.

Second actuator means 75 are supported on the clamp body 35 below the working plane 22.

The actuator means 75 are kinematically connected to the clamping bracket 72.

A sleeve 77 housing a control rod is advantageously fixed to one end 76 of the clamp body 35.

The clamping bracket 72 is connected transversely to the upper end of the control rod 78.

The opposite end of the control rod 78 is operatively connected to the actuator means 75.

In a particular embodiment of the invention, a cylinder and piston actuator 75, for example, a pneumatic or hydraulic actuator, is fixed to the end 76 of the clamp body 35 and is arranged vertically below the end 76 of the clamp body 35, the actuator being disposed below the plane in which the guides 4 are arranged.

The rod of the piston is operatively connected to the control rod 78.

In the fully lowered position, that is, the position in which the clamp is closed, the bracket 72 is advantageously housed in a channel between the arms of the fork-shaped jaws 41 and 42.

The actuator means 65 and 75 are operatively connected to a control unit.

The actuator means 65 and 75 are advantageously operatively connected to the numerical control device 15 which controls the work centre 1.

The advantage of avoiding the provision of tools which are arranged above the working plane and which obstruct the working head can be understood from the foregoing description. The portion of the piece close to the jaws is thus rendered accessible to the working member.

In the work centre proposed, the work space is very large, enabling the work to be performed with a single positioning of the piece.

The work centre according to the invention operates in the following manner.

First of all, the plurality of clamps 20 is positioned along the bench 3 for uniform and distributed support of the work-piece. This operation is performed in a manner such as to prevent the weight of the piece and the effect of the working from bending the piece excessively, reducing the working tolerances.

For particularly difficult machining operations, it is possible to provide several clamps 20 side by side so as to provide a wide support for the piece and a firm and extensive anchorage on the bench 3.

The arrangement of the clamps 20 side by side does not constitute an obstruction to working.

In fact, with the work centre 1 proposed, the clamp 20 has no lateral obstruction preventing free movement of the means 5 for supporting and moving the working member 6.

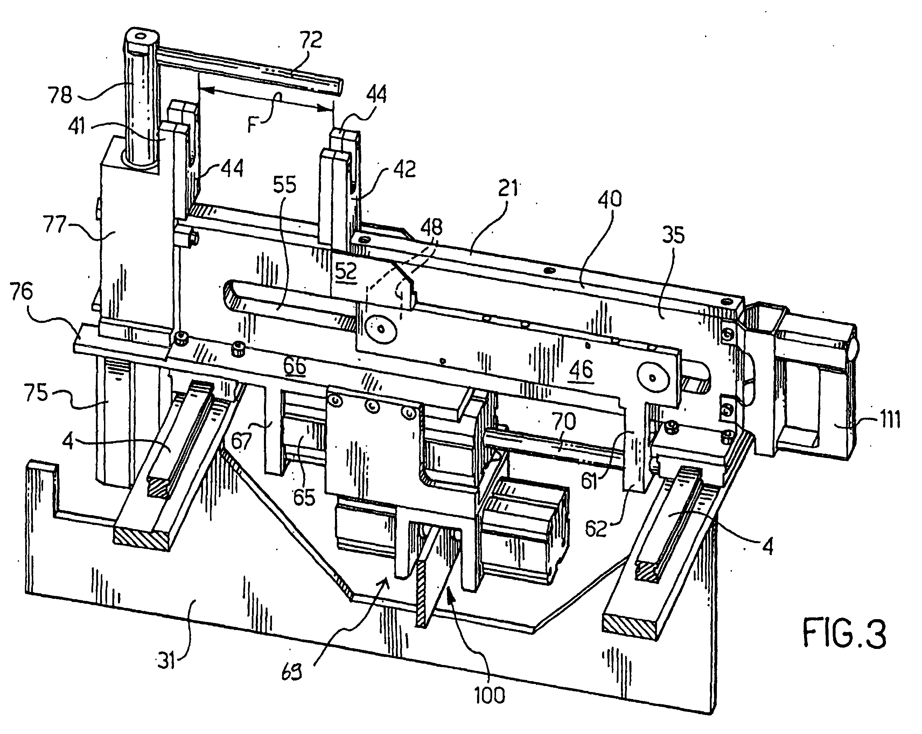

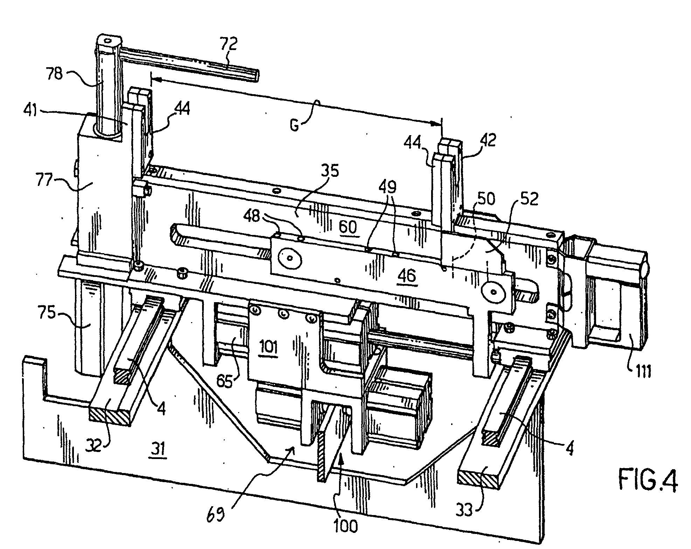

A signal sent by the control unit 15 causes air to flow to the cylinder and piston actuator means 65 and 75 so as to extend the rod 70 of the piston fully, moving apart and fully raising the jaws 41 and 42 and the clamping bracket 72 (the open position of the clamp 20 visible in Figures 3 and 4).

When the work piece has been placed on the support surface 21 and inside the jaws 41, 42, a signal is sent to the actuator means 65 and 75 to retract the rod 70 so as to move the jaws 41 and 42 and the clamping bracket towards one another in order to clamp the piece in the working position with the desired force.

The piece can then be machined by operation of the means 5 for supporting and moving the working member 6.

Moreover, the absence of obstructions disposed above the working plane 22 allows the working member 6 to be oriented freely relative to the piece.

It can be appreciated from the foregoing that the invention enables work to be performed in the vicinity of the clamping point of the jaws, preventing errors due to the deformation of the piece under the effect of the working.

The maximum opening of the clamp can be modified according to the transverse dimensions of the work-piece.

As can be seen from Figures 3 and 4, if the position of fixing of the jaw 42 which is movable on the carriage 35 is varied, a different degree of opening of the clamp 20 (indicated F or G) is obtained with the same travel of the carriage 35.

The maximum opening G which can be achieved may advantageously be comparable with the distance between the guides 4, by virtue of the fact that the presence of the actuator means 65, 75, which are disposed below the working plane 22, obstructs neither the movement of the carriage 35, or of the jaws 41, 42, nor that of the bracket 72.

In order to clamp the clamp 20 to the bench 3 effectively and precisely and to enable the clamp 20 to be repositioned quickly along the bench 3, the clamp 20 has clamping devices, generally indicated 100.

A shoulder 101 fixed to the base of the clamp body 35 supports a pair of clamping devices 102 and 103 arranged opposite and cooperating with respective clamping surfaces 104, 105 which extend longitudinally relative to the bench 3.

In a particular embodiment of the invention which can be seen in Figures 2, 3 and 4, the devices 102 and 103 cooperate with lateral surfaces 104 and 105 of a plate 106 arranged longitudinally relative to the bench 3.

The devices 102, 103, for example, pneumatic or hydraulic devices, are acted on during clamping by springs acting in a manner such as to extract their pistons. The action of the springs is opposed, selectively, by the action of a pressurized fluid.

The action of the fluid is controlled by means of a switch 110 disposed in a movement handle 111 fixed to one end 112 of the clamp body 35.

To enable the clamps 20 to be positioned quickly along the bench 3, for example, according to the dimensions of the piece and the type of working to be performed, means, generally indicated 200, for detecting the position of the clamp 20 along the bench 3 are fixed to the support and movement means 5 of the member 6 for working on the piece. These means 200 include means 201 for fixing the clamp body 35 to the support and movement means 5.

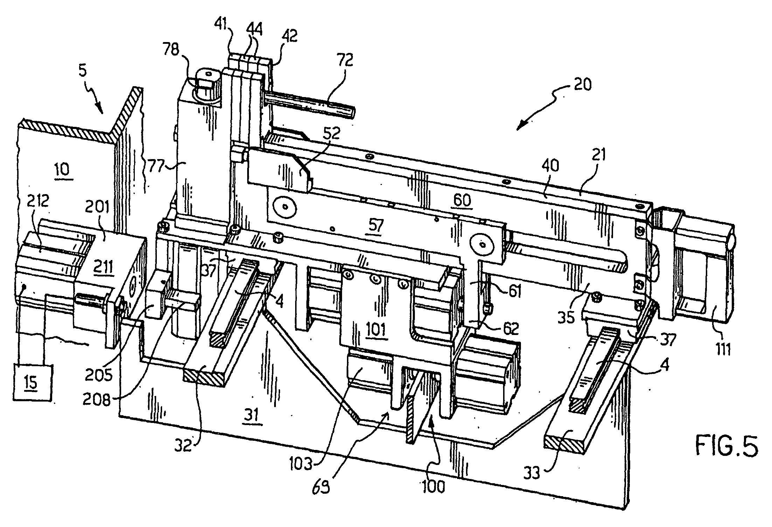

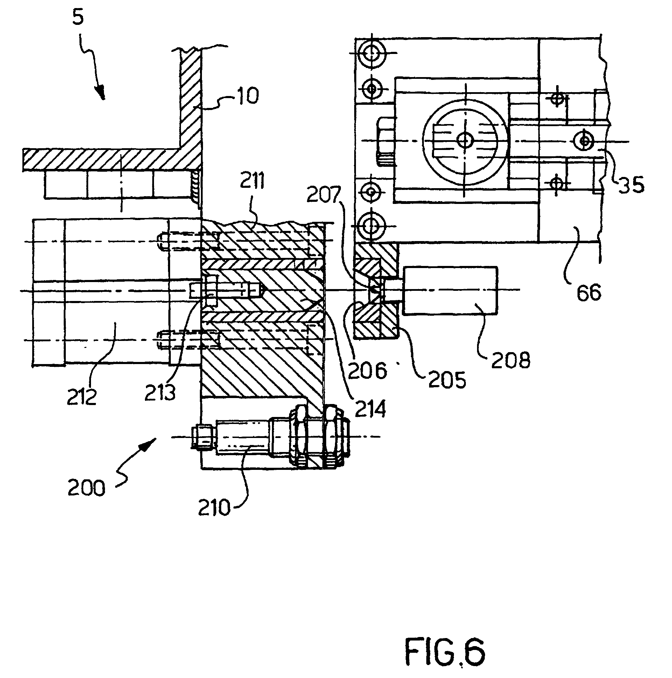

As can be seen from Figures 5 and 6, an engagement plate 205 fixed to the base plate 66 is disposed longitudinally relative to the bench 3 and facing the support and movement means 5.

The engagement plate 205 has a frusto-conical hole 206.

In the base of the hole 206 there is a lever 207 for operating a switch 208 which controls the opening of the clamping devices 100.

The detection means 200 comprise a transducer 210, for example, an optical transducer, a contactless position transducer, or the like, fixed to a support structure 211 connected to the pillar 10, so as to be arranged facing the clamp body 35.

The transducer 210 is operatively connected to the control unit 15 of the work centre 1.

A cylinder and piston device 212, for example, a pneumatic or hydraulic device, is fixed to the support structure 211 of the transducer 210 and has a pin 214 on the end of its rod 213.

The pin 214 has a frusto-conical free end which can be coupled with the blind frusto-conical hole 206 of the clamp 20, fixing the clamp 20 to the pillar 10 of the support and movement means 5.

When the clamp 20 is to be moved, the transducer 210 detects the position of the clamp 20 during the travel of the pillar 20 along the bench 3.

The transducer 210 then sends a signal to the control unit 15 which aligns the pin 214 with the frusto-conical hole 206.

After the pin 206 has been aligned, the control unit 15 sends a signal to the device 212 of the means for fixing the clamp 20 to the pillar 10, and the device 212 extends the pin 214, coupling its frusto-conical end with the hole 206.

As the pin 214 advances into the hole 206, it acts on the control lever 205 of the switch 208 which releases the device 100 for clamping the clamp 20.

With the pin 214 firmly coupled with the frusto-conical hole 206, it is possible to move the pillar 10 in order to position the clamp 10 along the bench 3 in a controlled manner.

In a different embodiment of the invention, each clamp 20 has its own drive means for moving it independently along the guides 4 in an adjustable manner.

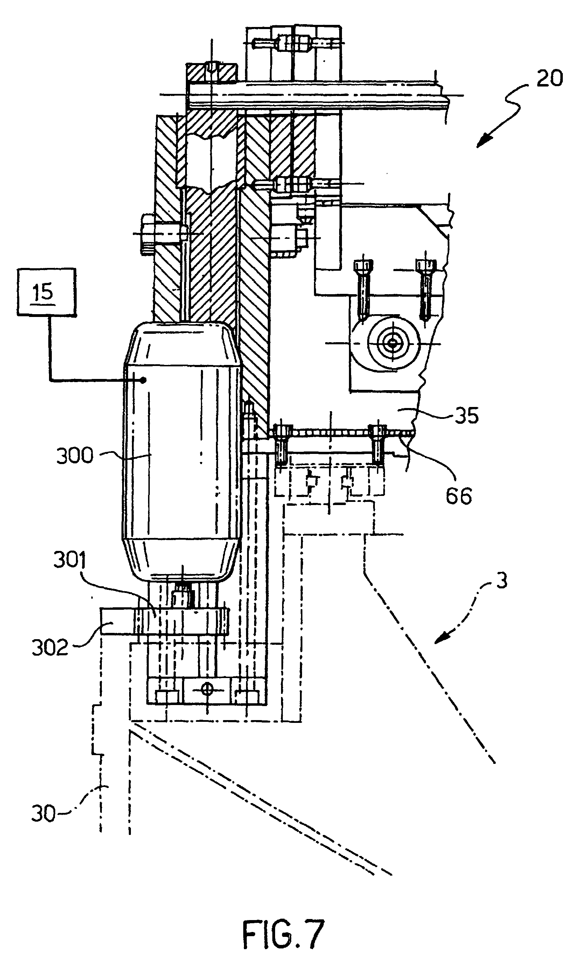

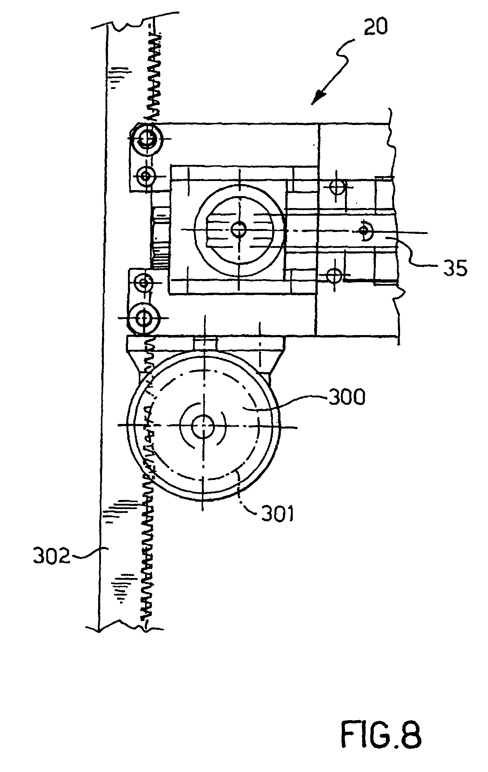

As can be seen from Figures 7 and 8, a geared motor unit 300 is fixed to the clamp body 35.

The geared motor unit 300 can be operated in a controlled manner, for example, it is operatively connected to the control unit 15 of the work centre 1.

The geared motor unit is advantageously disposed on one end of the clamp body 35 below the working plane 22. A pinion connected to the geared motor unit 300 cooperates with a rack 302 fixed longitudinally to the top of the shoulder 30 of the bench 3.

## Claims

1. A work centre (1) having a plurality of clamps (20) for clamping a work-piece, each clamp (20) comprising a clamp body (35) supported for sliding by longitudinal guides (4) fixed to a bench (3) along a working axis (X), a support surface (21) or working plane (22) for the work-piece disposed above the clamp body (35), jaws (41, 42) which are movable relative to one another from a separated position to a close-together position for gripping the work-piece, and which are supported for sliding on the clamp body (35), actuator means (65) supported by the clamp body (35) below the working plane (22), and kinematically connected to at least one jaw (42) for the movement thereof
**characterised in that**
said longitudinal guides (4) are fixed to a plurality of ribs (31), said ribs (31) being distributed along said working axis (X) and being provided with a respective V-shaped window (69) located between said guides (4), said V-shaped windows giving rise to a longitudinal channel (69a) open towards said working plane (22),
said actuator means (65) housed into said channel (69a).

2. A work centre (1) according to Claim 1, in which the actuator means (65) are disposed below the plane of the guides (4) for supporting the clamp body (35).

3. A work centre (1) according to any one of Claims 1 and 2, in which each movable jaw (42) is supported by a carriage (46) connected for sliding on the clamp body (35).

4. A work centre (1) according to Claim 3, in which the carriage (46) has a plurality of positions (48, 49, 50) for the fixing of the jaw (42).

5. A work centre (1) according to any one of Claims 3 and 4, in which the carriage (46) has an operating extension (61) arranged with its free end (62) below the working plane (22), and in that the free end (62) is operatively connected to the actuator means (65).

6. A work centre (1) according to any one of Claims 3 to 5, in which the clamp body (35) has a longitudinal channel (55) arranged parallel to the working plane (22), and in that the channel (55) houses sliding means (56) fixed to the carriage (46).

7. A work centre (1) according to any one of Claims 1 to 6, in which a clamping bracket (72) is supported movably on the clamp body (35) so as to cooperate with the jaws (41, 42), the clamping bracket (72) being disposed against the work-piece when in the clamping position.

8. A work centre (1) according to Claim 7, in which second actuator means (75) supported on the clamp body (35) below the working plane (22) are kinematically connected to the clamping bracket (72).

9. A work centre (1) according to Claim 8, in which a sleeve (77) fixed to an end (76) of the clamp body (35) houses a control rod (78) and the end of the control rod (78) projecting from the sleeve (77) is connected to the clamping bracket (72).

10. A work centre (1) according to Claim 9, in which the opposite end of the control rod (78) to the clamping bracket (72) is operatively connected to the second actuator means (75).

11. A work centre (1) according to any one of Claims 1 to 10, in which one of the jaws (41) is fixed to the clamp body (35) in the vicinity of an end (76) thereof.

12. A work centre (1) according to any one of Claims 1 to 11, in which devices (100) for clamping the clamp (20) are fixed to the clamp body (35) below the working plane (22) and operate in opposed positions, cooperating with respective clamping surfaces (104, 105) which extend longitudinally relative to the bench (3) of the work centre (1).

13. A work centre (1) according to any one of Claims 1 to 12, further comprising means (5) for supporting and moving a member (6) for working on the piece, with means (200) for detecting the position of the clamp (20) along the bench (3) and also including means (201) for fixing the clamp body (35) to the support and movement means (5).

14. A work centre (1) according to any one of Claims 1 to 12, in which each clamp (20) has its own drive means (300) for moving it independently along the guides (4) in an adjustable manner.

15. A work centre (1) according to Claim 14, in which a geared motor unit (300) fixed to the clamp body (3) can be operated in a controlled manner and a pinion (301) connected to the geared motor unit (300) cooperates with a rack (302) fixed longitudinally to the bench (3) of the work centre (1) .

16. A work centre (1) according to any one of the preceding claims, in which the clamp body (3) is plate-shaped.

## Patentansprüche

1. Bearbeitungszentrum mit mehreren Spanneinheiten (20) zum Spannen eines Werkstückes, wobei
- jede Spanneinheit (20) eine Spannbasis (35) umfasst, die verschiebbar auf Längsführungen (4) läuft, welche entlang einer Arbeitsachse (X) auf einem Bett (3) befestigt sind,
- eine Stützfläche (21) oder Arbeitsebene (22) für die Werkstücke auf der Spannbasis (35) vorhanden ist,
- Spannbacken (41, 42), die relativ zueinander beweglich sind zwischen einer beabstandeten Position und einer nahe beieinanderliegenden Position zum Greifen des Werkstückes und verschiebbar auf der Spannbasis (35) abgestützt sind,
- Betätigungselemente (65) unterhalb der Arbeitsebene (22) vorhanden sind, die von der Spannbasis (35) unterstützt sind und für die Bewegung kinematisch gekoppelt sind mit wenigstens einem Backen (42)
**dadurch gekennzeichnet, dass**
- die Längsführungen (4) an mehreren Rippen (31) befestigt sind, die entlang der Arbeitsachse (X) so angeordnet sind, dass eine entsprechende V-förmige Aussparung (69) zwischen den Führungen (4) angeordnet ist, und die V-förmige Aussparung ansteigt zu einem Längskanal (69a), der offen ist in Richtung zur Arbeitsebene (22) und
- die Betätigungselemente (65) im Kanal (69a) angeordnet sind.

2. Bearbeitungszentrum (1) nach Anspruch 1,
wobei die Betätigungselemente (65) unterhalb der Ebene der Führungen (4), die die Spannbasis (35) unterstützen, angeordnet sind.

3. Bearbeitungszentrum (1) nach einem der vorgehenden Ansprüche,
wobei jeder bewegliche Backen (42) von einem Träger (46) getragen wird, der verschiebbar auf der Spannbasis (35) angeordnet ist.

4. Bearbeitungszentrum (1) nach Anspruch 3,
wobei der Träger (46) mehrere Positionen (48, 49, 50) zum Befestigen des Backens (42) aufweist.

5. Bearbeitungszentrum (1) nach einem der Ansprüche 3 oder 4,
wobei der Träger (46) einen Betätigungsfortsatz (61) an seinem freien Ende (62) unterhalb der Arbeitsebene (22) aufweist und wobei das freie Ende (62) mit dem Betätigungselement (64) wirkverbunden ist.

6. Bearbeitungszentrum (1) gemäß einem der Ansprüche 3 - 5,
wobei die Spannbasis (35) einen Längskanal (55) parallel zur Arbeitsebene (22) aufweist und wobei der Längskanal (55) Gleitelemente (56) aufnimmt, die an dem Träger (46) befestigt sind.

7. Bearbeitungszentrum (1) gemäß einem der Ansprüche 1 - 6,
wobei eine Klemmbacke (72) verschiebbar auf der Spannbasis (35) angeordnet ist, um mit den Backen (41, 42) zusammen zu wirken, und die Klemmbacke (72) in der Klemmposition gegen das Werkstück gerichtet ist.

8. Bearbeitungszentrum (1) nach Anspruch 7,
wobei zweite Betätigungselemente (75) unterhalb der Arbeitsebene (22) und abgestützt von der Spannbasis (35) kinematisch gekoppelt sind mit der Klemmbacke (72).

9. Bearbeitungszentrum (1) nach Anspruch 8,
wobei eine Führungsbuchse (77) an einem Ende (76) der Spannbasis (35) befestigt ist und in dem ein Steuerzapfen (79) aufgenommen ist, und wobei das Ende des Steuerzapfens (78) aus der Führungsbuchse (77) vorsteht und mit der Klemmbacke (72) verbunden ist.

10. Bearbeitungszentrum (1) nach Anspruch 9,
wobei das der Klemmbacke (72) gegenüberliegende Ende des Steuerzapfens (78) mit den zweiten Betätigungselementen (75) wirkverbunden ist.

11. Bearbeitungszentrum (1) nach einem der Ansprüche 1 - 10,
wobei einer der Backen (41) an der Spannbasis (35) in der Nähe dessen Endes (76) angeordnet ist.

12. Bearbeitungszentrum (1) nach einem der Ansprüche 1 - 11,
wobei Vorrichtungen (100) zum Spannen der Spanneinheiten (20) auf der Spannbasis (35) unterhalb der Arbeitsebene (22) befestigt sind und in einander entgegengesetzten Positionen mit den entsprechenden Klemmflächen (104, 105) zusammenwirken, die sich in Längsrichtung relativ zum Bett (3) des Bearbeitungszentrum erstrecken.

13. Bearbeitungszentrum (1) nach einem der Ansprüche 1 - 12,
wobei ein Support (5) zum Bewegen einer Bearbeitungseinheit (6) vorhanden ist mit Einrichtungen (200) zum Bestimmen der Position der Spanneinheiten (20) entlang des Bettes (3) und Einrichtungen (201) zum Befestigen der Spannbasis (35) am Support (5).

14. Bearbeitungszentrum (1) nach einem der Ansprüche 1 - 12,
wobei jede Spanneinheit (20) ihren eigenen Antrieb (300) aufweist, zum unabhängigen, steuerbaren Verfahren entlang der Führungen (4).

15. Bearbeitungszentrum (1) nach Anspruch 14,
wobei die Motorgetriebeeinheit (300), die an der Spannbasis (35) befestigt ist, gesteuert betrieben werden kann und ein mit der Motorgetriebeeinheit (300) verbundenes Zahnrad (301) mit einer Zahnstange (302) zusammenwirkt, die in Längsrichtung am Bett (3) des Bearbeitungszentrums (1) befestigt ist.

16. Bearbeitungszentrum (1) nach einem der vorhergehenden Ansprüche,
wobei die Spannbasis (35) plattenförmig ausgebildet ist.

## Revendications

1. Poste de travail (1) comportant une pluralité de pièces de serrage (20) pour serrer une pièce de travail, chaque pièce de serrage (20) comprenant un corps de serrage (35) supporté de façon à glisser sur des guides longitudinaux (4) fixés à un banc (3) le long d'un axe de travail (X), une surface de support (21) ou un plan de travail (22) pour la pièce de travail disposé(e) au-dessus du corps de serrage (35), des mâchoires (41, 42) qui sont mobiles l'une par rapport à l'autre depuis une position séparée jusqu'à une position rapprochée pour saisir la pièce de travail, et qui sont supportées de façon à glisser sur le corps de serrage (35), des moyens de commande (65) supportés par le corps de serrage (35) au-dessous du plan de travail (22) et connectés de façon cinématique à au moins une mâchoire (42) pour son déplacement,
**caractérisé en ce que**
lesdits guides longitudinaux (4) sont fixés à une pluralité de nervures (31), lesdites nervures (31) étant distribuées le long dudit axe de travail (X) et étant munies d'une fenêtre en forme de V respective (69) située entre lesdits guides (4), lesdites fenêtres en forme de V formant en élévation un canal longitudinal (69a) ouvert en direction dudit plan de travail (22),
lesdits moyens de commande (65) étant logés dans ledit canal (69a).

2. Poste de travail (1) selon la revendication 1, dans lequel les moyens de commande (65) sont disposés au-dessous du plan des guides (4) pour supporter le corps de serrage (35).

3. Poste de travail (1) selon l'une quelconque des revendications 1 et 2, dans lequel chaque mâchoire mobile (42) est supportée par un chariot (46) connecté pour glisser sur le corps de serrage (35).

4. Poste de travail (1) selon la revendication 3, dans lequel le chariot (46) a une pluralité de positions (48, 49, 50) pour la fixation de la mâchoire (42) .

5. Poste de travail (1) selon l'une quelconque des revendications 3 et 4, dans lequel le chariot (46) comporte une extension conductrice (61) agencée avec son extrémité libre (62) au-dessous du plan de travail (22) et dans lequel l'extrémité libre (62) est connectée de façon à fonctionner avec les moyens de commande (65).

6. Poste de travail (1) selon l'une quelconque des revendications 3 à 5, dans lequel le corps de serrage (35) a un canal longitudinal (55) agencé parallèlement au plan de travail (22) et dans lequel le canal (55) loge des moyens de glissement (56) fixés au chariot (46).

7. Poste de travail (1) selon l'une quelconque des revendications 1 à 6, dans lequel une équerre de serrage (72) est supportée de façon mobile sur le corps de serrage (35) de façon à fonctionner conjointement avec les mâchoires (41, 42), l'équerre de serrage (72) étant disposée contre la pièce de travail dans la position de serrage.

8. Poste de travail (1) selon la revendication 7, dans lequel des seconds moyens de commande (75) supportés sur le corps de serrage (35) au-dessous du plan de travail (22) sont connectés de façon cinématique à l'équerre de serrage (72).

9. Poste de travail selon la revendication 8, dans lequel une gaine (77) fixée à une extrémité (76) du corps de serrage (35) loge une tige de commande (78) et l'extrémité de la tige de commande (78) se projetant depuis la gaine (77) est connectée à l'équerre de serrage (72).

10. Poste de travail (1) selon la revendication 9, dans lequel l'extrémité de la tige de commande (78) opposée à l'équerre de serrage (72) est connectée pour fonctionner avec les seconds moyens de commande (75).

11. Poste de travail (1) selon l'une quelconque des revendications 1 à 10, dans lequel l'une des mâchoires (41) est fixée au corps de serrage (35) au voisinage de l'une de ses extrémités (76).

12. Poste de travail (1) selon l'une quelconque des revendications 1 à 11, dans lequel des dispositifs (100) pour serrer la pièce de serrage (20) sont fixés au corps de serrage (35) au-dessous du plan de travail (22) et fonctionnent en des positions opposées, en fonctionnant conjointement avec des surfaces de serrage respectives (104, 105) qui s'étendent longitudinalement par rapport au banc (3) du poste de travail (1).

13. Poste de travail (1) selon l'une quelconque des revendications 1 à 12, comprenant en outre des moyens (5) pour supporter et déplacer un élément (6) pour travailler sur la pièce, avec des moyens (200) pour détecter la position de la pièce de serrage (20) le long du banc (3) et comprenant également des moyens (201) pour fixer le corps de serrage (35) aux moyens de support et de déplacement (5).

14. Poste de travail (1) selon l'une quelconque des revendications 1 à 12, dans lequel chaque pièce de serrage (20) a son propre moyen d'entraînement (300) pour son déplacement de façon indépendante le long des guides (4) d'une façon qui peut être réglée.

15. Poste de travail (1) selon la revendication 14, dans lequel une unité de moteur à engrenages (300) fixée sur le corps de serrage (35) peut fonctionner d'une façon contrôlée et un pignon (301) connecté à l'unité de moteur à engrenages (300) fonctionne conjointement avec une crémaillère (302) fixée longitudinalement sur le banc (3) du poste de travail (1) .

16. Poste de travail (1) selon l'une quelconque des revendications précédentes, dans lequel le corps de serrage (35) est de forme plate.
